# EUROPEAN PATENT SPECIFICATION

(11) **EP 3 578 038 B1**
(45) Date of publication and mention of the grant of the patent: **06.01.2021**
(21) Application number: 19176895.1
(22) Date of filing: 28.05.2019
(51) Int. Cl.: A01G 23/087, A01G 23/093

(54) **AN IMPROVED TREE SHEARS GRIPPER**
GRAPPIN CISAILLE AMÉLIORÉ POUR LES ARBRES
VERBESSERTER BAUMSCHERENGREIFER

(30) Priority: 04.06.2018 IT 201800005995
(43) Date of publication of application: 11.12.2019
(73) Proprietor: DMS S.r.l., 42034 Casina (Reggio Emilia) (IT)
(72) Inventor: MORANI, Davide, 42034 Casina (Reggio Emilia) (IT)
(74) Representative: Gagliardelli, Fabrizio

(56) References cited:
- CA-A- 904 150
- CA-C- 2 279 035
- DE-B- 1 003 421
- US-A1- 2014 261 890

## Description

This invention relates to an improved tree shears gripper.

In particular, the invention relates to a tree shears gripper which, advantageously, has a tilting movement and can also be used for the cutting of the trees.

There are prior art tree shears grippers which are mounted on the articulated arm of a self-propelled operating machine and are used to cut the trunk of a tree and move it to ground in a controlled manner.

The prior art tree shears grippers are suspended, by means of joints which allow freedom of oscillation, from, for example, a pair of hinges with orthogonal axes, at the distal end of the articulated arm and include a rack positioned below the above-mentioned joints which carries an elongate metallic supporting structure with a vertical extension, formed, for example, by some plates, to which a clamp is hinged which is connected to a chain saw.

In detail, the clamp is rotatable about a horizontal axis between a horizontal position, in which it can grip the trunk, to a vertical position, in which it moves the trunk to a horizontal position, in such a way that it can be released onto the ground.

A chainsaw which can oscillate in a plane in such a way as to cut the trunk is mounted parallel to the gripper.

In practice, in order to fell a tree, the operator of the machine actuates the arm in such a way as to move the gripper near to the trunk, checking that the gripper is horizontal and open so that it can be moved to the trunk to be gripped and closed.

Subsequently, the chainsaw cuts the trunk and the clamp is rotated in such a way as to move the cut trunk to a horizontal position, which is then rested or left to drop to the ground, by opening the clamp.

This prior art solution is not free of drawbacks.

A significant drawback is due to the fact that the distance between the clamp and the distal end of the arm of the machine is very large, even more than a metre, since it is the sum of the length of the oscillations and that of the supporting structure of the clamp.

In effect, on the one hand, it is not possible to directly connect the rack to the arm in a fixed fashion, since in that case the weight of the trunk moved could result in a risk of instability of the operating machine and, on the other hand, it is necessary to have a structure between the rack and the hinge of the clamp which is sufficiently long to take into account the overall dimensions of the clamp when it is in its horizontal position.

This long distance between the arm and clamp limits the height to which it is possible to move the products held by the gripper and consequently limits the loading of trunks both onto a transport vehicle and onto equipment, such as, for example, chippers.

A tree shears gripper is known from CA 2 279 035 C.

The technical purpose which forms the basis of this invention is therefore to provide a tree shears gripper which overcomes the above-mentioned drawback or other further limits which adversely affect the prior art.

This technical purpose is achieved by the gripper made according to claim 1.

Further features and advantages of this invention are more apparent in the detailed description below, with reference to preferred, non-limiting embodiments of the gripper according to the invention, illustrated in the accompanying drawings, in which:
- Figures 1 and 2 are axonometric views of the gripper according to the invention in two different operating configurations;
- Figures 3, 4 and 5 are side views of the gripper of the preceding drawings, in different steps of its operation;
- Figures 6 and 7 are cross section views of the gripper according to the invention, in the operating steps also shown in the first two drawings; and
- Figure 8 is an axonometric view of the rear of the proposed gripper, without its supporting structure.

With reference to the accompanying drawings, the numeral 1 denotes a tree shears gripper according to the invention.

The proposed gripper 1 is an apparatus comprising a clamp 10 designed for gripping tree trunks, a cutting device 11 designed to cut a trunk gripped by the clamp 10 and a supporting structure 2, which is able to support the clamp 10, the cutting device 11 and also the load, for example the cut trunk or other object gripped by the clamp 10.

The clamp 10 and the cutting device 11 are mounted on the structure 2; more precisely, the clamp 10 and the cutting device 11 can be integral with each other, for example because they are both mounted on a connecting frame 12 which is fixed to the supporting structure 2.

The gripper 1 is designed to be attached to the articulated arm of a self-propelled operating machine or to similar mechanical components provided on other machines, such as, for example, tractors.

For example, in accordance also with the prior art, the structure 2 can be suspended at the distal end of the arm by a pair of hinges with orthogonal axes, to allow the oscillation of the gripper 1, for the reasons already explained in the introduction.

In the accompanying drawings, for sake of simplicity, only the lower part 3 of the coupling means is illustrated by means of which the gripper 1 is suspended from the arm.

The gripper 1 can rotate about itself around an axis V which, in use, is vertical, except for any oscillations, and for this purpose a rack can be provided above the above-mentioned supporting structure 2 and motor-driven means for the rotation 31, for example of the known hydraulic type. In more general terms, the supporting structure 2 is provided at the top with a rotary coupling for rotating about itself around an axis of rotation V which, in use, is positioned vertically.

The supporting structure 2 can have a substantially polyhydric external shape, with a main extension on a plane and, preferably, it is also elongate to form a front end 20, designed to face the trunks to be cut, and an opposite rear end 21.

In detail, in use, the structure 2 is positioned horizontally, with the exception of oscillations.

The supporting structure 2 can include a plurality of plates, which constitute the upper and side walls, which define an inner space which is open downwards and contains at least partly the mechanisms and actuators according to the invention.

Clearly, the jaws of the clamp 10 are opened or closed by one or more actuators, for example hydraulic cylinders, according to known methods.

The cutting device 11 may include a chainsaw 110 or a disc saw or other similar means and can be moved along a plane in such a way as to cut the trunk; the oscillation mechanism of the device 11 and the actuators which actuate it can also be those of the prior art grippers, such as those already produced by the same Applicant.

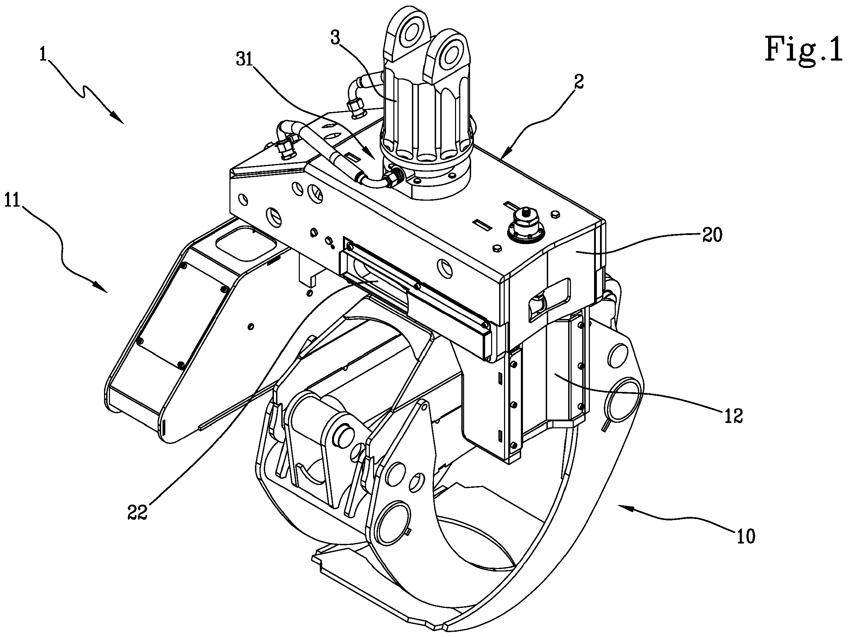

The clamp 10 is movable between a first and a second operating position, in which it has different inclinations with respect to the supporting structure 2; in particular, the clamp 10 in the first operating position can be angled by approximately ninety degrees relative to the second operating position (see Figures 1 and 2 or 3 and 5).

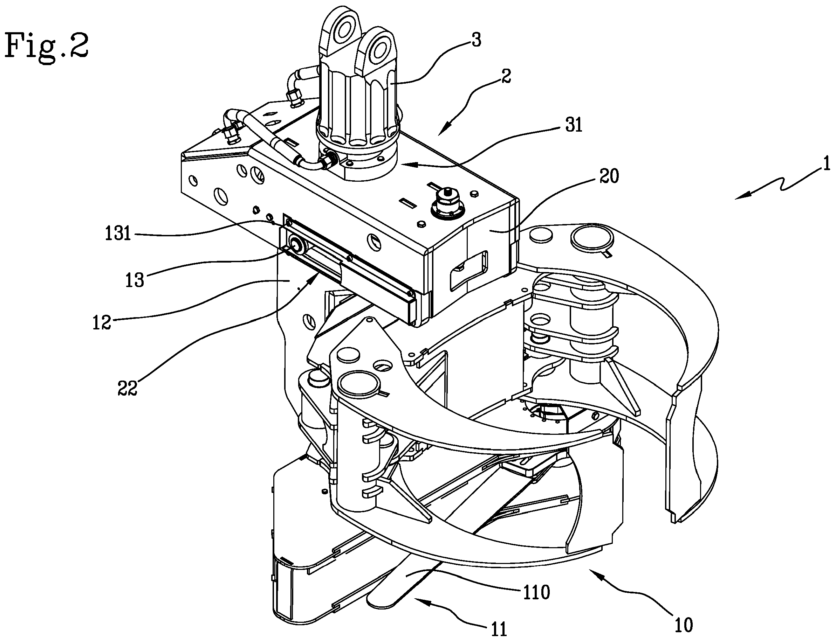

In the first operating position (shown in Figures 1, 3 and 6), the clamp 10 or more precisely its jaws are positioned in a substantially vertical plane, therefore parallel to the axis of rotation V and transversal (more specifically, at right angles) with respect to the supporting structure 2, whilst in the second operating position (shown in Figures 2, 5 and 7), the jaws of the clamp 10 are horizontal and therefore parallel to the supporting structure 2.

In practice, as explained in more detail below, in the first position the clamp 10 is at rest or holds the cut trunk in a horizontal position, whilst in the second position the clamp 10 grips the trunk in a vertical position and it is therefore mainly in the condition in which the trunk has not yet been cut. It should be noted that, as already partly mentioned, when this description specifies the orientation of the components of the gripper 1, for example "horizontal" or vertical", this refers to the behaviour in use of the gripper 1, always except for its oscillations caused by the attachment means on which the articulated arm is suspended.

Still more in detail, since each jaw of the clamp 10 preferably comprises a pair of parallel plates joined to the distal ends by a transversal member, when this description mentions the orientation of the clamp 10 this refers to the orientation of the pairs of plates.

In its first operating position, the clamp 10 extends from the structure downwards and, in the second position, the jaws of the clamp 10 protrude in a cantilever fashion, in such a way as to reach the trunk.

According to an important aspect of the invention, the gripper 1 includes means 13, 40, 41, 42, 43 for moving the clamp 10, mounted on the supporting structure 2 and designed to move the clamp 10 between the first and the second operating positions by means of a roto-translational movement, preferably of the tilting type.

With this feature, advantageously, the clamp 10, when moving from the second operating position, where it is horizontal, to the first operating position, where it is vertical, makes a significantly reduced movement compared with that of the prior art grippers.

For this reason, by using the gripper 1 according to the invention, it is possible to move the load gripped by the clamp 10 to a height above ground which is greater than that of the prior art grippers, thereby with the possibility of loading a larger quantity of product on transport vehicles or feeding equipment, such as, for example, chippers, and to do so with greater convenience.

It should be noted that, also in its second operating position, the clamp 10 of the gripper 1 proposed, whilst protruding from the structure 2, remains below it.

The movement means comprise the use of some kinematic mechanisms and actuators, which will be described below in relation to a preferred, but non-limiting, embodiment of the invention.

The invention can comprise the use of a main pin 13, rotatable about its longitudinal axis of extension, which is integral with the clamp 10, being preferably fixed to the above-mentioned connecting frame 12 and which is constrained to run in a linear guide 22, made in the supporting structure 2. In detail, the guide 22 can be defined by two parallel linear slots 22, made in side walls of the supporting structure 2, that is to say, in the plates which define the sides, the slots 22 being able to engage idle rollers 131 mounted at the opposite ends of the main pin 13 of the clamp 10.

In more general terms, the clamp 10 of the gripper 1 proposed is hinged about a first axis of oscillation, which in use is horizontal and which is constrained to run in a plane; in this way, the clamp 10 and the cutting device 11 can translate and also rotate.

In the example shown in the drawings, the main pin 13 is located above the clamp 10 and, relative to an ideal plane which passes through the opening and closing articulation axes, is located in a different half-space relative to the jaws.

In order to allow the tilting movement around the main pin 13 and along the guide 22, the movement means according to the invention preferably comprise a kinematic mechanism, which can be formed by two kinematic mechanisms connected to each other and symmetrical with respect to a vertical centre-line plane of the structure which passes through the above-mentioned axis of rotation V.

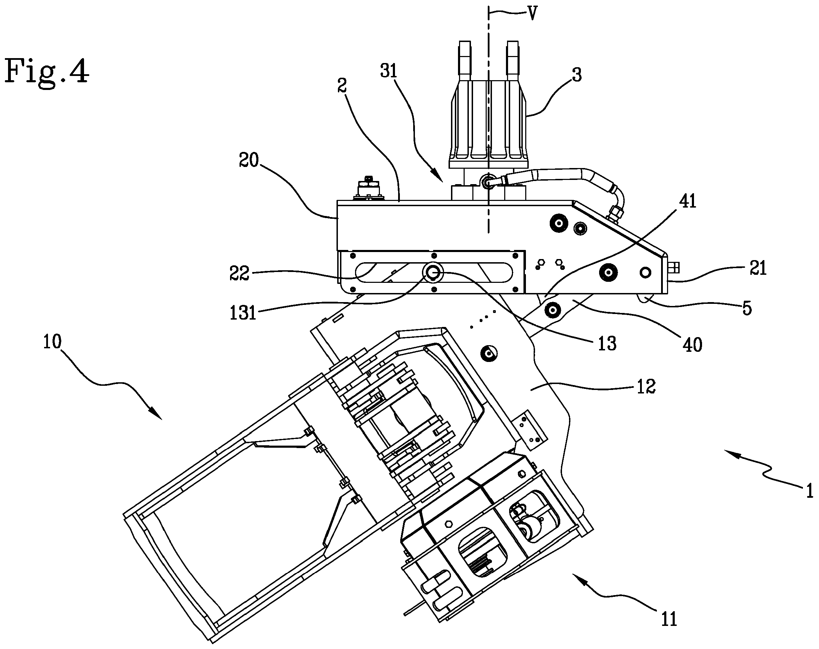

In any event, the above-mentioned kinematic mechanism comprises at least an arm 40 which is hinged to a first end or directly to the clamp 10 or to the above-mentioned connecting frame 12, having the opposite end hinged to the supporting structure 2 in a position behind the pin 13 and the relative guide 22 (see Figures 4, 5, 6 and 7).

The arm 40 is also hinged, in an intermediate position relative to its ends, to a first lower connecting rod 41, which is also hinged to a second upper connecting rod 42, to form a sort of articulated joint.

The second connecting rod 42 is in turn hinged to the structure 2, preferably at an intermediate point between the main pin 13 and the hinge point between the above-mentioned arm 40 and the structure 2 and, again preferably, this point of articulation between the second connecting rod 42 and the structure is positioned higher than the pin 13, and at that hinge point of the arm 40.

For the purpose of actuation, at least one of the two kinematic mechanisms is provided with a first linear actuator 43, preferably a first single acting hydraulic cylinder, which is hinged in turn both to the connecting rods 41, 42 and to the structure 2.

More specifically, the end of the rod of the cylinder 43 hinged to the point of articulation between the two connecting rods 41, 42, whilst the opposite end of the sleeve is hinged to the supporting structure 2 preferably in a position above the guide 22 of the main pin 13.

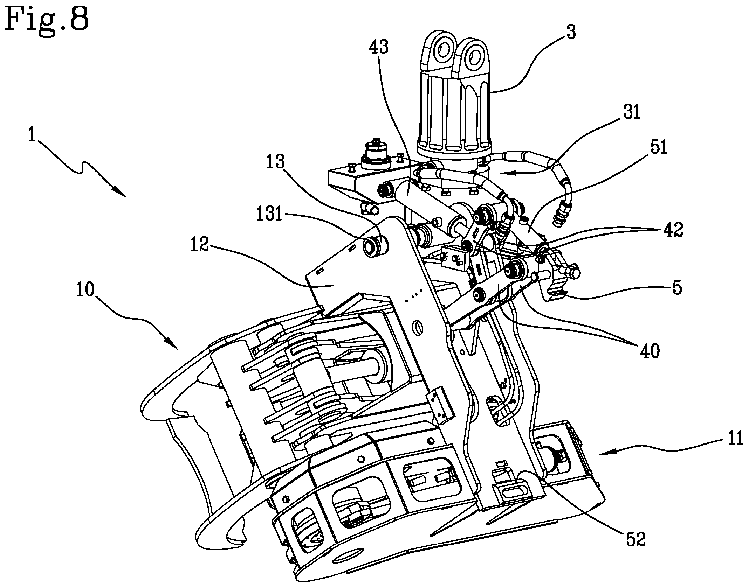

As can be partly seen in Figure 8, the two kinematic mechanisms can each be formed by a respective arm 40 and respective connecting rods 41, 42, which can be connected to each other by cross-members, for example by bushings which join together the joints mentioned in the above description.

In this case, the first actuator 43 can be, for example, by connected to the bushing shared by the four connecting rods 41, 42.

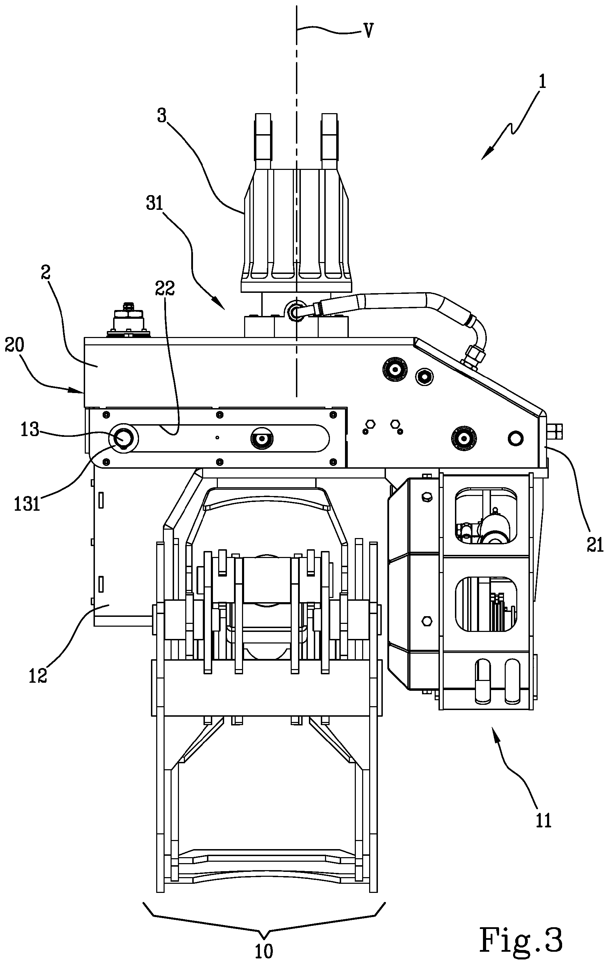

Before illustrating further details of the invention, the operation is described with the use of Figures 3 - 5 and 6 -8.

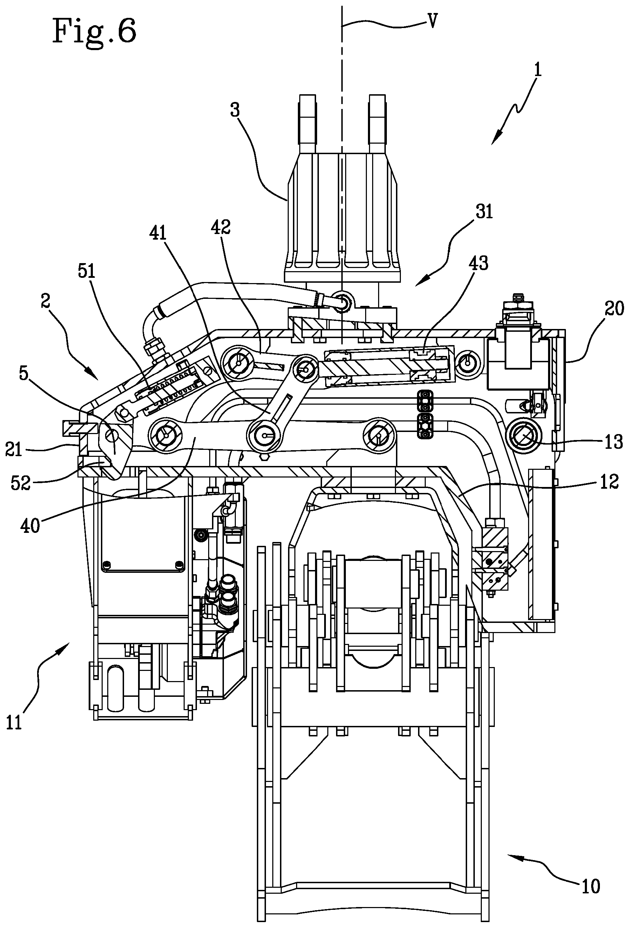

Initially, the gripper 1 is in a rest configuration, wherein the clamp 10 is in its first operating position (see Figures 3 and 6).

During this step, the main pin 13 is in its front end stroke position and the above-mentioned first hydraulic cylinder 43 is completely withdrawn; as shown in Figure 6, in this configuration, the two connecting rods 41, 42 of the "joint" are arranged as a "V" and the arm 40 is horizontal.

Once the gripper 1 has been moved in front of a tree to be cut, the clamp 10 must be moved to the second operating position in such a way as to prepare the gripper 1 for gripping the trunk.

For this purpose, the first cylinder 43 is activated, so that it starts to push the articulation of the "joint", which starts to open, with the two connecting rods 41, 42 which spread apart and the lower connecting rod 41 which pushes the arm 40.

As a result, the main pin 13 starts sliding backwards and, at the same time, the clamp 10 starts moving backwards and rotating forwards around the pin 13, pushed from behind by the arm 40 which is rotating towards the front part of the gripper 1 (see Figures 4 and 8).

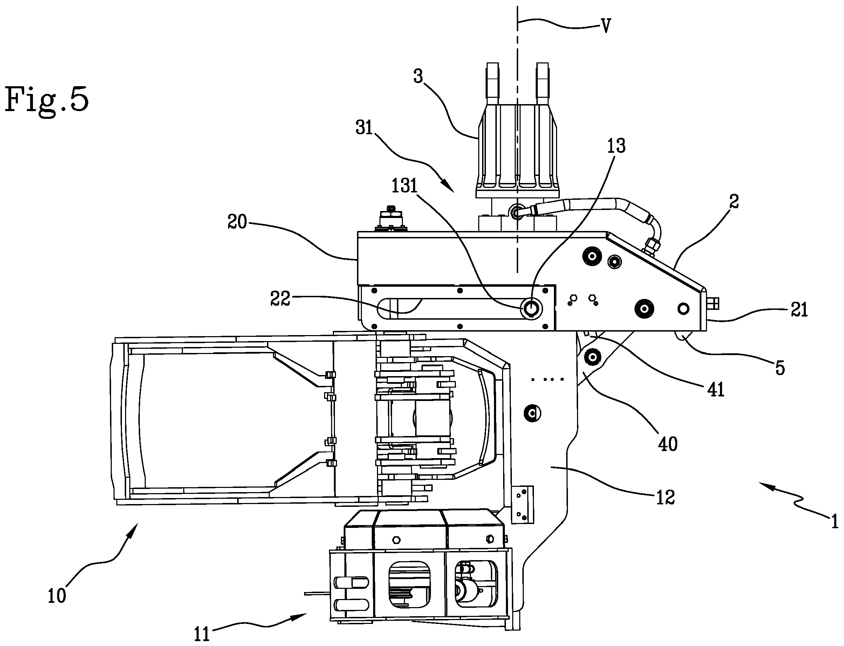

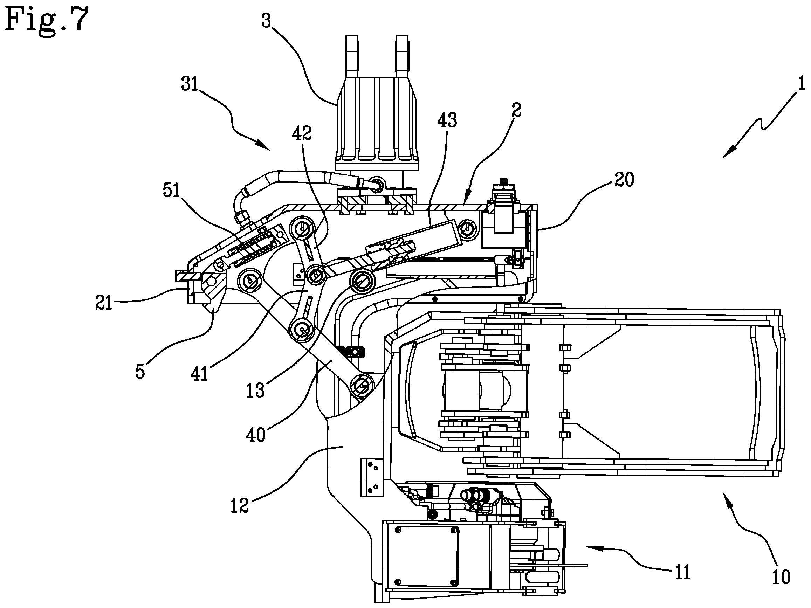

This step ends when the clamp 10 is in its second operating position, shown in Figures 5 and 7, where the pin 13 has reached the rear limit stop and the arm 40 is oblique with respect to the supporting structure 2.

At this point, the clamp 10 can be closed on the trunk, in such a way as to grip it firmly, preferably in the proximity of the base and the hydraulic saw, or another cutting device 11, will cut it completely in a transversal direction.

After that, the gripper 1 is lifted by actuation of the articulated arm 40 and the weight of the cut trunk will push the arm 40 backwards, thereby causing the withdrawal of the rod of the cylinder 43, whilst the main pin 13 returns to moving forwards.

In this way, the kinematic mechanisms automatically move the clamp 10 to its first operating position, in which the jaws are vertical but the trunk is horizontal.

By opening the jaws of the clamp 10 the trunk can be dropped to the ground, which ends the tree felling step.

According to a preferred embodiment, illustrated in Figures 6, 7 and 8, the proposed gripper 1 includes a hook 5 for anchoring the clamp 10, when it must be kept in its first operating position.

The hook 5 is located to the rear of the supporting structure 2 and is hinged to it relative to a horizontal axis, and therefore transversal to the extension in length of the structure 2 itself.

Moreover, the hook is rotated by a second single effect hydraulic cylinder 51, whose rod is hinged to the hook 5 and is subject to elastic pushing means, for example housed in the sleeve of the second cylinder 51.

At the rear of the clamp 10 or the above-mentioned connection frame 12 there is a gripping element 52 for the hook 5, for example made by means of a through hole which defines a gripping edge for the hook.

When the clamp 10 is moved to its first operating position, the gripping element 52 pushes the hook 5 backwards, such that the rod of the second cylinder 51 withdraws in the sleeve thus loading the elastic means, for example consisting of a spring; meanwhile, the hook 5 enters into the hole, rotates and grips the above-mentioned edge.

When the clamp 10 is to be moved to the second operating position, the second cylinder 51 is actuated in such a way that causes the rotation of the hook 5 and releases the clamp 10 itself which can then tilt towards the second operating position.

It should be noted that the gripper 1 according to the invention can also be used for the cutting of felled trunks.

In practice, by keeping the clamp 10 in the first operating position the gripper 1 and articulated arm are actuated in such a way as to grip the trunk at a section close to the end cut previously, after which the chainsaw 110 is used for cutting a piece of trunk and the operation is repeated in such a way as to obtain a plurality of pieces.

## Claims

1. A tree shears gripper (1) comprising a clamp (10) designed for gripping tree trunks, a cutting device (11) designed to cut a trunk and a supporting structure (2) for the clamp (10) and the cutting device (11), wherein the clamp (10) is movable between a first operating position and a second operating position, in which it has different inclinations relative to the supporting structure (2), **characterised in that** it comprises means (13, 40, 41, 42, 43) for moving the clamp (10) designed to move the clamp (10) between the first and second operating positions by means of a roto-translational movement.

2. The gripper (1) according to the preceding claim, wherein the gripper (1) is inclined in the first operating position by ninety degrees relative to the second operating position.

3. The gripper (1) according to any one of the preceding claims, wherein the supporting structure (2) has a substantially polyhydric shape which extends mainly in a plane and wherein in the first operating position the clamp (10) is positioned transversal to the structure (2) and in the second position it is, on the other hand, parallel to the structure.

4. The gripper (1) according to the preceding claim, wherein in the first position the clamp (10) extends downwards from the structure (2) and in the second position it projects in a cantilever fashion.

5. The gripper (1) according to any one of the preceding claims, wherein the supporting structure (2) is provided at the top with a rotary coupling for rotating about itself around an axis of rotation (V) which, in use, is located vertically, in the first position the clamp (10) being placed in a plane parallel to the axis (V) and in the second position being placed transversal to it.

6. The gripper (1) according to any one of the preceding claims, wherein the movement means are designed to move the clamp (10) between the two operating positions with a rocking type movement.

7. The gripper (1) according to any one of the preceding claims, wherein the clamp (10) is hinged about a first axis of oscillation which is constrained to run in a plane.

8. The gripper (1) according to the preceding claim, wherein the clamp (10) is fixed to a pin (13), which defines the first axis of oscillation, which is constrained to run in a linear guide (22) formed in the supporting structure (2).

9. The gripper (1) according to the preceding claim, wherein the clamp (10) is associated in a rotary fashion to an end of at least one rigid arm (40), which in turn is hinged to an opposite end of the structure (2).

10. The gripper (1) according to the preceding claim, wherein the arm (40) is hinged in an intermediate position relative to its end to at least a first connecting rod (41) which is hinged to at least a second connecting rod (42) which is in turn hinged to the structure (2), at least one linear actuator (43) being hinged in turn to the connecting rods (41, 42) and to the structure (2).

11. The gripper (1) according to any one of claims 8 to 10, wherein, at the opposite ends, the pin (13) comprises respective rollers (131) engaged in relative slots (22) made in side walls of the supporting structure (2).

## Patentansprüche

1. Baumscherengreifer (1) (auch als "Fällgreifer" bekannt), umfassend eine Klaue (10), die für das Ergreifen von Baumstämmen ausgelegt ist, eine Schneidvorrichtung (11), die für das Schneiden eines Stammes ausgelegt ist, und eine Trägerstruktur (2) für die Klaue (10) und die Schneidvorrichtung (11), wobei die Klaue (10) beweglich ist zwischen einer ersten Arbeitsstellung und einer zweiten Arbeitsstellung, in der sie verschiedene Neigungen bezogen auf die Trägerstruktur (2) aufweist, **dadurch gekennzeichnet, dass** er Mittel (13, 40, 41, 42, 43) zum Bewegen der Klaue (10) umfasst, die dafür ausgelegt sind, die Klaue (10) mit einer Rotations- und Translationsbewegung zwischen der ersten und der zweiten Arbeitsstellung zu bewegen.

2. Greifer (1) nach dem vorhergehenden Anspruch, wobei der Greifer (1) in der ersten Arbeitsstellung um neunzig Grad relativ zu der zweiten Arbeitsstellung geneigt ist.

3. Greifer (1) nach einem der vorhergehenden Ansprüche, wobei die Trägerstruktur (2) eine im Wesentlichen polyedrische Form aufweist, die sich vorwiegend in einer Ebene erstreckt, und wobei in der ersten Arbeitsstellung die Klaue (10) quergerichtet zu der Struktur (2) angeordnet ist und in der zweiten Stellung hingegen parallel zu der Struktur angeordnet ist.

4. Greifer (1) nach dem vorhergehenden Anspruch, wobei sich in der ersten Stellung die Klaue (10) von der Struktur (2) ausgehend nach unten erstreckt und in der zweiten Stellung konsolenartig hervorragt.

5. Greifer (1) nach einem der vorhergehenden Ansprüche, wobei die Trägerstruktur (2) an der Oberseite mit einer Drehkupplung ausgestattet ist, damit sie sich um eine Drehachse (V) um sich selbst drehen kann, die im Gebrauch vertikal angeordnet ist, wobei in der ersten Stellung die Klaue (10) in einer Ebene parallel zu der Achse (V) angeordnet ist und in der zweiten Stellung quergerichtet dazu angeordnet ist.

6. Greifer (1) nach einem der vorhergehenden Ansprüche, wobei die Bewegungsmittel dafür ausgelegt sind, die Klaue (10) mit einer Kippbewegung zwischen den zwei Arbeitsstellungen zu bewegen.

7. Greifer (1) nach einem der vorhergehenden Ansprüche, wobei die Klaue (10) scharnierbeweglich um eine erste Schwingachse angelenkt ist, die gezwungen ist, auf einer Ebene zu laufen.

8. Greifer (1) nach dem vorhergehenden Anspruch, wobei die Klaue (10) an einem Stift (13) festgelegt ist, der die erste Schwingachse definiert und der gezwungen ist, in einer Linearführung (22) zu laufen, die in der Trägerstruktur (2) ausgebildet ist.

9. Greifer (1) nach dem vorhergehenden Anspruch, wobei die Klaue (10) drehbar mit einem Ende eines zumindest einen starren Arms (40) verbunden ist, der wiederum an einem gegenüberliegenden Ende scharnierbeweglich an der Struktur (2) angelenkt ist.

10. Greifer (1) nach dem vorhergehenden Anspruch, wobei der Arm (40) in einer in Bezug auf seine Enden zwischenliegenden Position an zumindest eine erste Pleuelstange (41) angelenkt ist, die an zumindest eine zweite Pleuelstange (42) angelenkt ist, die wiederum an der Struktur (2) angelenkt ist, wobei zumindest ein linearer Stellantrieb (43) wiederum an die Pleuelstangen (41, 42) und an die Struktur (2) angelenkt ist.

11. Greifer (1) nach einem der Ansprüche von 8 bis 10, wobei, an den gegenüberliegenden Enden, der Stift (13) entsprechende Rollen (131) umfasst, die in entsprechende Schlitze (22) eingreifen, die in Seitenwänden der Trägerstruktur (2) angefertigt sind.

## Revendications

1. Un grappin cisaille pour arbres (1) comprenant une pince de préhension (10) destinée à saisir des troncs d'arbre, un dispositif de coupe (11) destiné à couper un tronc et une structure de support (2) pour la pince de préhension (10) et le dispositif de coupe (11), où la pince de préhension (10) est mobile entre une première position opérationnelle et une deuxième position opérationnelle, dans lesquelles elle a des inclinaisons différentes par rapport à la structure de support (2), **caractérisé en ce qu'**il comprend des moyens (13, 40, 41, 42, 43) de déplacement de la pince de préhension (10) destinés à déplacer la pince de préhension (10) entre les première et deuxième positions opérationnelles selon un mouvement de roto-translation.

2. Le grappin (1) selon la revendication précédente, dans lequel le grappin (1) est incliné dans la première position opérationnelle de quatre-vingt-dix degrés par rapport à la deuxième position opérationnelle.

3. Le grappin (1) selon l'une quelconque des revendications précédentes, dans lequel la structure de support (2) a une forme essentiellement polyédrique qui s'étend principalement dans un plan et dans lequel, dans la première position opérationnelle, la pince de préhension (10) est positionnée transversale à la structure (2) et dans la deuxième position elle est, par contre, parallèle à la structure.

4. Le grappin (1) selon la revendication précédente, dans lequel dans la première position la pince de préhension (10) s'étend vers le bas depuis la structure (2) et dans la deuxième position elle dépasse en porte-à-faux.

5. Le grappin (1) selon l'une quelconque des revendications précédentes, dans lequel la structure de support (2) est munie sur le dessus d'un accouplement rotatif pour tourner sur elle-même autour d'un axe de rotation (V) qui, en utilisation, est situé verticalement, dans la première position la pince de préhension (10) étant placée dans un plan parallèle à l'axe (V) et dans la deuxième position étant placée transversale à celui-ci.

6. Le grappin (1) selon l'une quelconque des revendications précédentes, dans lequel les moyens de déplacement sont destinés à déplacer la pince de préhension (10) entre les deux positions opérationnelles selon un mouvement de type basculant.

7. Le grappin (1) selon l'une quelconque des revendications précédentes, dans lequel la pince de préhension (10) est articulée autour d'un premier axe d'oscillation qui est contraint à courir dans un plan.

8. Le grappin (1) selon la revendication précédente, dans lequel la pince de préhension (10) est fixée à une goupille (13), qui définit le premier axe d'oscillation, qui est contrainte à coulisser dans un guide linéaire (22) formé dans la structure de support (2).

9. Le grappin (1) selon la revendication précédente, dans lequel la pince de préhension (10) est associée de façon rotative à une extrémité d'au moins un bras rigide (40), qui est à son tour articulé à une extrémité opposée à la structure (2).

10. Le grappin (1) selon la revendication précédente, dans lequel le bras (40) est articulé dans une position intermédiaire par rapport à son extrémité à au moins une première tige de liaison (41) qui est articulée à au moins une deuxième tige de liaison (42) qui est à son tour articulée à la structure (2), au moins un actionneur linéaire (43) étant à son tour articulé aux tiges de liaison (41, 42) et à la structure (2).

11. Le grappin (1) selon l'une quelconque des revendications de 8 à 10, dans lequel, au niveau des extrémités opposées, la goupille (13) comprend des rouleaux (131) respectifs engagés dans des fentes (22) correspondantes réalisées dans des parois latérales de la structure de support (2).
